Europäisches Patentamt

European Patent Office

Office européen des brevets

(11) Publication number: **0 512 241 A1**

# EUROPEAN PATENT APPLICATION

(21) Application number: **92105418.5**

(22) Date of filing: **30.03.92**

(51) Int. Cl.5: **H02G 3/04**

(30) Priority: **10.05.91 IT GE910021 U**

(43) Date of publication of application:
**11.11.92 Bulletin 92/46**

(84) Designated Contracting States:
**DE ES FR GB**

(71) Applicant: **BOCCHIOTTI SOCIETA'PER L'INDUSTRIA ELETTROTECNICA S.P.A.**
**8, Piazza Dante**
**I-16121 Genova(IT)**

(72) Inventor: **Bocchiotti, Domenico**
**Piazza Dante, 8**
**I-16121 Genova(IT)**

(74) Representative: **Porsia, Attilio, Dr.**
**c/o Succ. Ing. Fischetti & Weber Via Caffaro 3/2**
**I-16124 Genova(IT)**

(54) Raceway for accommodating wires and mains for electric and telephonic use or the like.

(57) The sidewalls (3) of the raceway (1) are fomed by a set of strips (203,203',203'', etc.) separated by slots (403). The strips (203) are connected to each other, at their upper ends, by extensions (503) which, at their connection points are formed with weakened areas (703) having pre-set rupture characteristics. Moreover, the lower ends of the strips (203) are connected to a baseboard (103) of the sidewall of the raceway (1) by lines (603) having pre-set rupture characteristics. By acting manually on a strip (203') and urging it sideways, it can be easily severed either from the adjacent strips (203,203') by rupturing the areas (703) and from the baseboard (103) without using any tool.

Fig.1

The present invention relates to a raceway for accommodating wires and mains for electric and telephonic use or the like.

More particularly, the present invention relates to the raceways of the type specified above, made of plastics material, constituted by a channel member substantially of U-shaped cross section, provided with a closure cover.

A problem encountered upon the installation of raceways is to form through-openings in the sidewalls of said raceways for passing the wires either directed to lateral branches or for connection to switches, sockets, or similar external fixtures.

For this purpose, it has been proposed to form, in the sidewalls of the raceways, vertical slots extending from an area close to the base of the raceway sidewalls up to an area close to the upper edge of said walls, so that upon the installation of said raceways, the installer can cut by means of a tool, for example, by means of shears, one or more strips located between said slots so as to form through-openings in the desired areas of the raceway sidewalls.

This operation, however, cannot be effected easily at all times, due also to the fact that the installer is not always in a suitable position.

In order to overcome the disadvantages encountered in effecting such an operation, it has been proposed to extend said slots to the upper free edge of the raceway sidewalls and to form, at the base of the plastics strips between said slots, a weakening indentation so as to constitute a preferential rupture line enabling the installer to remove the individual strips from the raceway sidewall in a quick manner and without using any tool.

Such a system is advantageous with respect to the system described previously, but it has a serious drawback in that the so-constructed raceways are too flexible longitudinally, which is a serious disadvantage in many installation circumstances.

Therefore, the main object of the invention is to provide a raceway of the type specified above, which overcomes the disadvantages of the raceways known at present.

According to a charcateristic of the present invention, said object is achieved by forming, in the sidewalls of a raceway, a set of vertical slots extending from an area close to the base of the raceway sidewalls up to an area close to the upper edge of said walls, and by forming, either at the base of said plastics strips between said slots and in the upper zone connecting each strip to the next, weakening notches so as to create pre-established lines of rupture enabling the installer to disconnect and remove the individual strips of the raceway sidewalls by using only the hands, while preserving a sufficient longitudinal and transverse rigidity of the raceway to prevent the latter from bending, thanks to the connected upper ends of the strips.

Further characteristics and advantages of the present invention will become more apparent in the following description of a preferred embodiment thereof, shown by way of a non-limiting example in the accompanying drawings, wherein:

Figure 1 is a fragmentary side electional view of a raceway according to the invention;

Figure 2 is a sectional view on the line II-II of the raceway of figure 1;

Figures 3 and 4 are sectional views, similar to that of figure 2, of a raceway according to the invention whose cover has been removed, and they show two successive steps of removing a strip from one of the two sidewalls of the raceway; and

Figure 5 is a side elevational view similar to that of figure 1 of a section of the raceway according to the invention, one strip having been removed from the wall of the raceway.

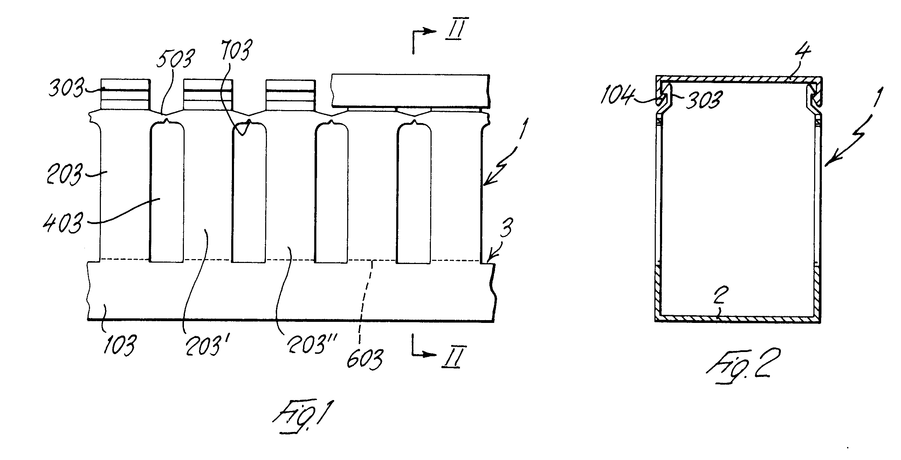

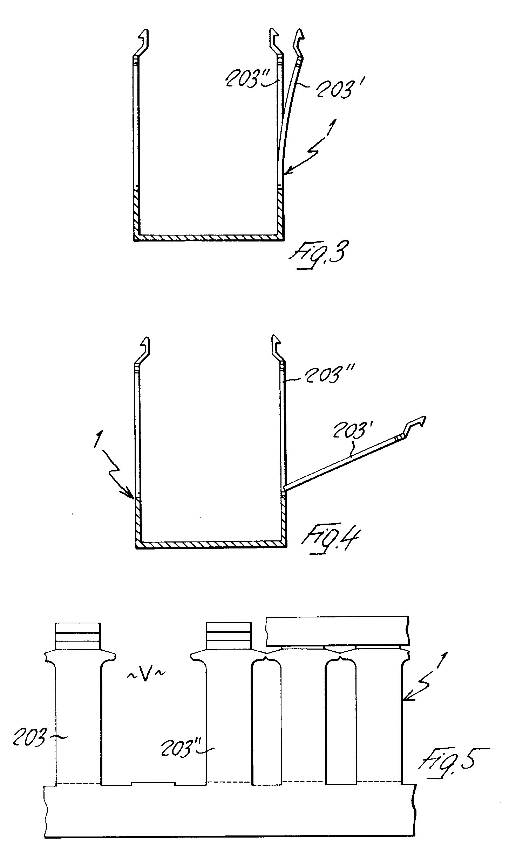

With reference to the drawings, and with particular reference to figures 1 and 2 thereof, the raceway 1 shown therein comprises a bottom 2, two sidewalls 3 and a cover 4. The sidewalls comprise, in turn, a base band or baseboard 103, and a plurality of vertical strips 203,203',203'', etc. extending upwards and terminating in a hook-shaped portion 303 adapted to interengage with the complementarily-shaped edge 104 of the cover 4. The strips 203 are separated from each other by slots 403 and are connected to each other, close to their upper ends, below the hook-shaped portions 303, by a set of extensions or projections 503. The strips 203 are provided at the base thereof with a notch or groove 603 constituting a preferential rupture line, and are provided with similar means or weakening notches 703 at the area of connection of said upper extensions or projections 503.

Upon the installation of the raceway 1, the installer who wishes to form a through-opening in the sidewall of the raceway urges first the top portion of a strip sideways, for example the strip 203' in figure 3, so as to break the weakened connections at 703 whereby it is connected to the extensions 503 of the two adjacent strips 203 and 203'', and then by proceeding in bending the strip 203' sideways he causes the rupture of the base portion of the strip along the rupture line 603 (figure 4), thus removing the strip 203' from the raceway 1 and thus opening a through-opening V of the desired width in the raceway sidewall, as best shown in figure 5.

The advantages of the raceway herein described and shown are now evident. In fact, it permits the installer to form side openings in the raceway by acting with only one hand on the side strips 203, with no need of using any tool, while the other hand is available for other operations.

## Claims

1.  A plastics raceway for accommodating wires and mains for electric and telephonic use or the like, comprising a U-shaped channel member (1) the sidewalls (3) of which comprise a set of vertical slots (403) extending from an area close to the base (103) of said sidewalls up to an area close to the upper edge of said walls (3), so as to form a set of vertical strips (203,203',203'', etc.) constituting the walls of the raceway, a line (603) of weakening and/or pre-established rupture being provided at the base of said strips (203,203',203'') in the region connecting the strips to the base (103) of the raceway sidewall, and said strips being connected to each other at their upper ends by means of horizontal portions (503) of the wall, characterized in that said horizontal wall portions (503) interconnecting the upper ends of the strips (203,203',203''...) are provided with weakening notches (703) so as to create pre-established rupture areas permitting the upper portion of a selected strip (203') to be separated easily from the upper portions of the side-by-side adjacent ones (203,203'') and permitting to separate the base (603) of said strip (203') from the base portion (103) of the raceway sidewall (3) by using only the hands without resorting to any tool.

2.  A raceway according to claim 1, in which said horizontal wall portions (503) connecting the upper portions of said strips are formed by tapered extensions decreasing in height towards the center, the central area connecting said extensions being weakened by notches and/or rupture lines.

Fig.2

Fig.1

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 436 513 (MARCEL HESS)<br>* the whole document * | 1,2 | H02G3/04 |
| A | GB-A-2 097 599 (CRITCHLEY BROS LTD)<br>* page 1, line 99 - line 126; figures 1,2 * | 1 | |
| | | | **TECHNICAL FIELDS SEARCHED (Int. Cl.5 )** |
| | | | H02G |

The present search report has been drawn up for all claims

| Place of search | Date of completion of the search | Examiner |
|---|---|---|
| THE HAGUE | 11 AUGUST 1992 | RIEUTORT A.S. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)